# EUROPÄISCHE PATENTANMELDUNG

(11) **EP 0 964 199 A1**
(43) Veröffentlichungstag der Anmeldung: **15.12.1999**
(21) Anmeldenummer: 99107462.6
(22) Anmeldetag: 28.04.1999
(51) Int. Cl.: F16L 25/00, F16L 33/26

(54) **Dichte Verbindung für gewellte Metallschläuche**

(30) Priorität: 18.05.1998 DE 29808856 U; 16.10.1998 DE 29818473 U
(71) Anmelder: Witzenmann GmbH Metallschlauch-Fabrik Pforzheim, D-75175 Pforzheim (DE)
(72) Erfinder: Dr. Burkhardt, Carlo, 75331 Grunbach (DE); Winter, Klaus, 73525 Schwäbisch-Gmünd (DE)
(74) Vertreter: Blumenröhr, Dietrich Dipl.-Ing.

(57) **Zusammenfassung**

Die Erfindung betrifft eine dichte Verbindung eines Endes eines gewellten Metallschlauches (1) mit einer Durchgangsbohrung (8) eines Bauteils (7), wobei der Metallschlauch ein insbesondere endständig aufgestecktes Dichtungselement (2) aufweist, welches den Umfang des Metallschlauchs auf einer axialen Länge zwischen zumindest zwei Wellentälern überlappt, formschlüssig in diese zumindest zwei Wellentäler eingreift und auf seiner Außenseite mit zumindest einer umlaufenden Dichtlippe (6) versehen ist, die an der Innenseite der Durchgangsbohrung anliegt.

## Beschreibung

Die Erfindung betrifft eine dichte Verbindung des Endes eines gewellten Metallschlauches mit einer Durchgangsbohrung eines Bauteils.

Beim Befestigen eines Wellschlauchs an einem Bauteil wie etwa einem Gehäuse, einem Flansch oder dergleichen besteht allgemein die Problematik, daß der Wellschlauch aufgrund einer fehlenden Anschlag- bzw. Stirnfläche und wegen seiner geringen Materialstärke nicht einfach an dem Bauteil beispielsweise durch Schweißen, Löten oder Kleben festgelegt werden kann. Bisher behilft man sich beispielsweise damit, daß der Wellschlauch von einer Überwurfmutter mit Schneidringen beaufschlagt und gegen einen Flansch eines Gehäuses festgeschraubt wird, wobei der Flansch meist aus einem am Gehäuse festgeschweißten Gewindeaufsatz besteht, dessen Bohrung mit der Durchgangsbohrung des Gehäuses fluchtet.

Soweit hier von Durchgangsbohrungen die Rede ist, so ist dies nur zur Vereinfachung und beispielhaft der Fall. Natürlich sind damit auch alle verwandten Anwendungsfälle gemeint, denen das gleiche Prinzip zugrunde liegt, also etwa die Verbindung eines Metallachlauches mit einem rohrförmigen Anschlußelement, mit einer Hülse und dergleichen.

Der vorliegenden Erfindung liegt hiervon ausgehend die Aufgabe zugrunde, eine dichte Verbindung zwischen Metallschlauch und Bauteilbohrung herzustellen, die sich durch eine vereinfachte Handhabbarkeit und einen ebenso einfachen Aufbau auszeichnet.

Diese Aufgabe wird erfindungsgemäß dadurch gelöst, daß der Metallschlauch ein insbesondere endständig aufgestecktes Dichtungselement aufweist, daß das Dichtungselement den Umfang des Metallschlauchs auf einer axialen Länge zwischen zumindest zwei Wellentälern überlappt, daß das Dichtungselement formschlüssig in diese zumindest zwei Wellentäler eingreift, und daß das Dichtungselement auf seiner Außenseite mit zumindest einer umlaufenden Dichtlippe versehen ist, die an der Innenseite der Durchgangsbohrung abdichtend anliegt.

Mit Hilfe dieses einfachen Dichtungselementes wird nicht nur der Zwischenraum zwischen Metallschlauch und Durchgangsbohrung abgedichtet; vielmehr dient das Dichtungselement auch noch dazu, den Metallschlauch in der Durchgangsbohrung festzulegen, zumindest bei Drücken von bis zu 2 bar, wie sie beispielsweise bei Ölleitungen für Kfz-Motoren eingehalten werden. Hierzu ist das Dichtungselement mit Querschnittsreduzierungen versehen, die zumindest zwei Wellentäler des Metallschlauches beaufschlagen und so eine axiale Festlegung des Dichtungselementes gegenüber dem Metallschlauch schon im noch nicht eingesteckten Zustand herstellen. Nach dem Einstecken des Metallschlauches zusammen mit dem Dichtungselement in die Durchgangsbohrung des Bauteils wird bei entsprechend eng tolerierten Größenverhältnissen von Innendurchmesser der Bohrung zu Außendurchmesser des Dichtungselementes bzw. von Außendurchmesser des Metallschlauches zu Innendurchmesser des Dichtungselementes einerseits die formschlüssige Verbindung zwischen Dichtungselement und Metallschlauch noch erhöht und andererseits quasi ein Preßsitz des Dichtungselementes in der Durchgangsbohrung hergestellt, durch den die Dichtlippe für eine umlaufend dichte und reibende Anlage mit hohem Haftreibungskoeffizienten sorgt.

Hierbei ist es natürlich von großem Vorteil, wenn das Dichtelement aus elastisch nachgiebigem Material besteht und auch die Dichtlippe elastisch nachgiebig an der Innenwand und der Durchgangsbohrung anliegt, um zum einen ein zerstörungsfreies Einstecken in die Durchgangsbohrung zu ermöglichen und zum anderen ein dauerhaftes elastisches Anliegen der Dichtlippe an der Innenwandung der Durchgangsbohrung sicherzustellen. Besonders wesentlich ist es, daß der Außendurchmesser der Dichtlippe im noch nicht beaufschlagten bzw. eingesteckten Zustand größer ist als der Innendurchmesser der Durchgangsbohrung; nur so läßt sich eine elastische Vorspannung und hierdurch eine dauerhafte Abdichtung erzielen.

Der Gegenstand der Erfindung läßt sich neben den bereits erwähnten Ölleitungen für Kfz-Motoren auch bei Abgasrückführleitungen für Kfz, bei Heizkesseln in der Haustechnik und bei sonstigen Bauteilen anwenden, die keinen allzu großen Drücken ausgesetzt sind.

Ein optimaler Formschluß zwischen Dichtungselement und Metallschlauch ergibt sich dann, wenn das Dichtungselement zwei vollständig ausgebildete Wellentäler beaufschlagt; jedoch lassen sich die erfindungsgemäßen Vorteile auch dann schon erzielen, wenn eines der Wellentäler aus dem endständigen Bord des Metallschlauches besteht und somit eigentlich nur für einen Formschluß in der Einsteckrichtung des Metallschlauches in die Dichtung sorgt. Das Beaufschlagen des endständigen Bordes des Metallschlauches kann aber auch dahingehend ausgenutzt werden, daß dieser den Bord beaufschlagende Bereich des Dichtungselementes einen noch etwas geringeren Innendurchmesser aufweist, um so ein zu weites Einstecken des Metallschlauches in das Dichtungselement zu verhindern.

Andererseits kann das Beaufschlagen des endständigen Bordes auch derart erfolgen, daß das Dichtungselement diesen Bord überdeckt, wodurch der Endbereich des Schlauches, also insbesondere die Schnittkante nicht bearbeitet - entgratet oder geschliffen - werden muß.

Des weiteren ist es vorteilhaft, wenn die Durchgangsbohrung eine von der Dichtlippe beaufschlagte Innenwandung aufweist, deren Axialerstreckung zumindest in etwa der Länge des eingesteckten Dichtungselementes entspricht, wobei das Dichtungselement vorzugsweise nicht nur eine, sondern zwei oder sogar drei Dichtlippen aufweisen sollte, die axial voneinander beabstandet sind und somit einen doppelten oder dreifachen Anlagebereich bilden mit entsprechend verbesserten Dicht- und Reibwerten. Gerade bei einer solch großen Anzahl von Dichtlippen bzw. einer entsprechend groß ausgebildeten Länge des Dichtungselementes ist eine größere Axialerstreckung der Durchgangsbohrung von Vorteil. Zwar kann im Bereich der Durchgangsbohrung bzw. des Metallschlauches ein Anschlag vorgesehen sein, der das Einstecken des Metallschlauches mit Dichtungselement in die Durchgangsbohrung begrenzt; jedoch ist es von Fall zu Fall auch möglich, bei entsprechend groß ausgebildeter Axialerstreckung der Durchgangsbohrung die Einstecktiefe des Metallschlauches variabel zu gestalten, um hierdurch eine Anpassung an die jeweiligen Gegebenheiten zu ermöglichen.

Soweit vorstehend ganz allgemein von gewellten Metallachläuchen die Rede ist, sei hierzu angemerkt, daß es insbesondere zur Erzielung einer optimalen Abdichtung bevorzugt ist, wenn der Metallschlauch ringförmig gewellt ist, um nicht nur eine umlaufende Dichtlippe auf der Außenseite des Dichtelementes, sondern um auch eine radial umlaufende definierte innere Dichtfläche zwischen Dichtungselement und Metallschlauch zu erhalten.

Ein beispielhafter Anwendungsfall der vorliegenden Erfindung besteht darin, daß das mit der Durchgangsbohrung versehene Bauteil ein Motorgehäuse ist, und daß der Metallschlauch eine Ölleitung ist. Wie vorstehend erwähnt, sind die Drücke bei diesem Anwendungsfall derart niedrig, daß eine zusätzliche axiale Fixierung des Metallschlauches nicht erforderlich ist, sondern allein der Preßsitz des Metallschlauches mit dem Dichtungselement in der Durchgangsbohrung ausreicht.

Die vorstehende Erfindung läßt sich aber in ihrer Einfachheit auch für solche Anwendungsfälle mit höheren Drücken ausnutzen, wobei zweckmäßigerweise am Bauteil ein Halteelement festgelegt ist, das zur axialen Fixierung des Metallschlauches dient und in ein Wellental eingreift, das insbesondere in dem Abschnitt des Metallschlauches vorgesehen ist, der aus der Durchgangabohrung vorsteht. Ein solches Halteelement kann beispielsweise aus einem U-förmigen, den Metallschlauch im Bereich des Wellentals umgreifenden Federbügel, aus einer Schnappfeder oder dergleichen oder auch aus einem einfachen keine federnde Eigenschaften aufweisenden Blechformteil bestehen.

Alternativ zu diesem Halteelement wird darüber hinaus vorgeschlagen, ein Halteelement derart auszubilden, daß das Halteelement zusätzlich zum Dichtungselement auf den Metallschlauch aufgesteckt und zusammen mit diesem in die Durchgangsbohrung eingesteckt ist, und daß das Halteelement in seinem Durchmesser gegenüber dem Durchmesser der Durchgangsbohrung so dimensioniert ist, daß es unter Vorspannung an der Innenseite der Durchgangsbohrung anliegt.

Hierdurch ergibt sich der Vorteil, daß durch geeignete Auswahl von Form und Material des Halteelements die Haftreibung des mit dem Halteelement bestückten Metallschlauchs in der Durchgangsbohrung wesentlich erhöht werden kann, so daß die Verbindung auch dann noch dicht ist und ohne gegenseitige Relativbewegung von Metallschlauch und Bauteil bleibt, wenn höhere Drücke als die allein durch die Haftreibung des Dichtungselements aufnehmbaren 2 bar auftreten.

Im Gegensatz zu den vorstehend beschriebenen Halteelementen, die in geeigneter Weise am Bauteil und insbesondere an dessen Außenseite festgelegt werden müssen, nutzt dieses erfindungsgemäße Halteelement den Umstand, daß der Metallschlauch und die Durchgangsbohrung aufeinander angepaßte Dimensionierungen aufweisen, die schon von dem aufgesteckten Dichtelement zur Herstellung einer dichten Verbindung ausgenutzt werden, so daß das vorliegende Halteelement in Anlehnung an das Dichtelement ebenfalls den Zwischenraum zwischen Metallschlauch und Durchgangsbohrung ausfüllt, nur mit der Aufgabe, keine umlaufende Dichtlippe zur Verfügung zu stellen, sondern eine Anlage an der Innenwand der Durchgangsbohrung mit möglichst großem Reibkoeffizenten.

Somit muß für das erfindungsgemäße Halteelement das die Durchgangsbohrung aufweisende Bauteil nicht verändert oder angepaßt werden, vielmehr wirkt das Halteelement in dem ohnehin schon für das Dichtelement vorhandenen Bereich der Innenwand der Durchgangabohrung.

Sinnvollerweise ist das Halteelement auf dem Metallschlauch in dessen Einsteckrichtung in die Durchgangsbohrung hinter dem Dichtungselement angeordnet, also auf dem dem Metallschlauchende abgewandten benachbarten Axialabschnitt, um während des Einsteckens des Metallschlauchs die Innenwandung der Durchgangsbohrung im vom Dichtelement beaufschlagten Bereich nicht zuvor durch das Halteelement zu beschädigen.

Zur axialen Fixierung des Halteelements auf dem Metallschlauch empfiehlt sich zunächst einmal eine reibschlüssige Anlage, wobei das Halteelement unter Vorspannung an der Außenwand des Metallschlauches anliegt; besonders vorteilhaft ist es aber, wenn das Halteelement in zumindest ein Wellental des Metallschlauches formschlüssig eingreift, so daß das Halteelement möglichst unverschiebbar auf dem Metallschlauch festliegt. Wird dann beim Einstecken des Metallschlauchs zusammen mit dem Halteelement und Durchgangsbohrung eine die Haftreibung zwischen Halteelement und Durchgangsbohrung übersteigende Kraft ausgeübt, so ist sichergestellt, daß diese Kraft nicht zu einer Relativbewegung zwischen Halteelement und Metallschlauch führt.

Vorteilhafterweise besteht das Haltelement aus einem Tiefziehteil, das zusammen mit dem Metallschlauch in die Durchgangsbohrung eingrepreßt ist, also zweckmäßigerweise vor dem Einstecken einen geringfügig größeren Außendurchmesser aufweist als die Durchgangsbohrung.

Es sei noch angemerkt, daß die Vorspannung des an der Durchgangsbohrung anliegenden Halteelements zum einen durch eine elastische Verformung von Außenbereichen hergestellt werden kann, die in einem Durchmesserbereich des Haltelements angeordnet sind, der beim Einstecken in die mit einem kleineren Durchmesser versehene Durchgangsbohrung elastisch verformt wird; darüber hinaus ist es natürlich auch möglich, daß die gegenseitige Anlage von Halteelement und Innenwand der Durchgangsbohrung durch eine plastische Verformung von Bereichen des Halteelements und - im Extremfall sogar in sehr kleinen Teilbereichen - durch eine plastische Verformung der Innenwand der Durchgangsbohrung erfolgt, beispielsweise dann, wenn die Außenseite des Halteelements mit Widerhaken versehen ist und die Materialien von Halteelement und Innenwand der Durchgangsbohrung eine solche plastische Verformung zulassen.

Weitere Merkmale und Vorteile der Erfindung ergeben sich aus der nachfolgenden Beschreibung von Ausführungsbeispielen anhand der Zeichnung; hierbei zeigen
- Figur 1: in teilweise geschnittener Seitenansicht die Einzelkomponenten einer erfindungsgemäßen dichten Verbindung vor dem Einstecken in die Durchgangsbohrung eines Bauteils;
- Figur 2: eine alternative Ausführungsform zu den Einzelkomponenten einer erfindungsgemäßen dichten Verbindung ebenfalls in teilweise geschnittener Seitenansicht;
- Figur 3: einen Metallschlauch mit aufgestecktem Dichtelement in teilweise geschnittener Seitenansicht;
- Figur 4: einen Metallschlauch mit aufgestecktem Dichtungselement in teilweise geschnittener Seitenansicht; und
- Figur 5: eine erfindungsgemäße dichte Verbindung in teilweise geschnittener Seitenansicht;
- Figur 6: einen Metallschlauch mit aufgestecktem erfindungsgemäßen Halteelement vor dem Einstecken in eine Durchgangsbohrung; und
- Figur 7: den Metallschlauch nebst Halteelement im in die Durchgangsbohrung eingesteckten Zustand.

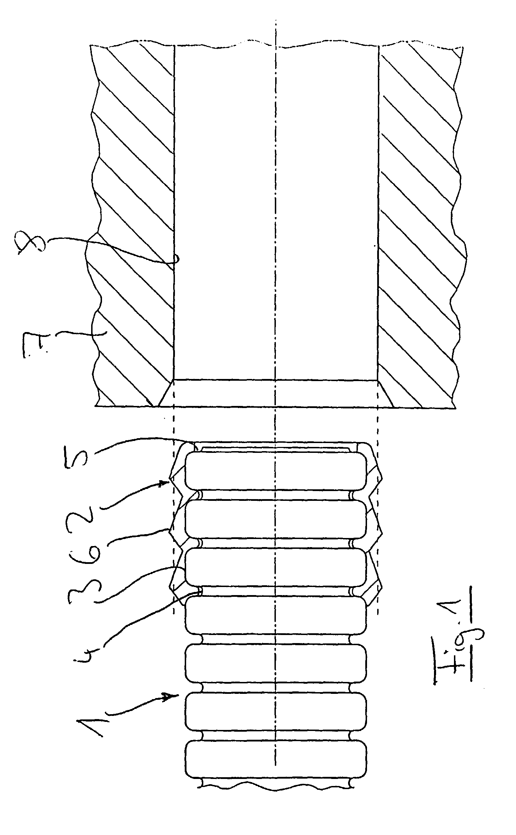

In Figur 1 ist ein Ende eines Metallschlauches 1 in Form eines Wellrohres mit ringförmiger Wellung mit zylindrisch ausgebildeten Wellenbergen dargestellt, auf dessen letzte drei Wellenberge ein Dichtungselement 2 aufgesteckt ist, welches diese drei Wellenberge sowie einen Teilbereich des viertletzten Wellenberges übergreift und gleichzeitig in die drei dazwischenliegenden Wellentäler 4 eingreift und auch den endständigen Bord 5 des Metallschlauches beaufschlagt. Hierdurch ergibt sich eine dauerhafte und sichere formschlüssige Verbindung zwischen Dichtungselement und Metallschlauch.

Das Dichtungselement 2 ist auf seiner Außenseite mit drei Dichtlippen 6 versehen, die zusammen eine gezackte Außenfläche des Dichtungselementes ergeben, wobei die einzelnen Dichtlippen im Axialschnitt gesehen stumpfwinklige Dichtungskanten darstellen.

In Figur 1 ist außerdem ein Bauteil 7 mit einer zylindrischen Durchgangsbohrung 8 dargestellt, wobei die Durchgangsbohrung 8 im Bereich der Bauteilaußenseite angefast ist. In Figur 1 ist durch eine gestrichelte Linie die Verlängerung des Bohrungsdurchmessers dargestellt, um einen Größenvergleich zwischen dem Innendurchmesser der Durchgangsbohrung 8 und dem Außendurchmesser des Dichtungselementes 2 im Bereich der Dichtlippen 6 zu ermöglichen. Hierbei kann man feststellen, daß ein kleiner Teilbereich der Dichtlippen 6 über den gestrichelten Bereich hinausragt. Dieser Teilbereich sorgt für eine dichte Anlage der Dichtlippen an der Innenwandung der Durchgangsbohrung 8, indem die Dichtlippen beim Einstecken des Metallschlauches und des Dichtungselementes in die Durchgangsbohrung auf den Innendurchmesser der Durchgangsbohrung 8 zusammengedrückt werden und hierdurch einerseits eine größere Dichtfläche bilden und andererseits aufgrund der elastischen Verformung dauerhaft gegen die Durchgangsbohrung gedrückt werden.

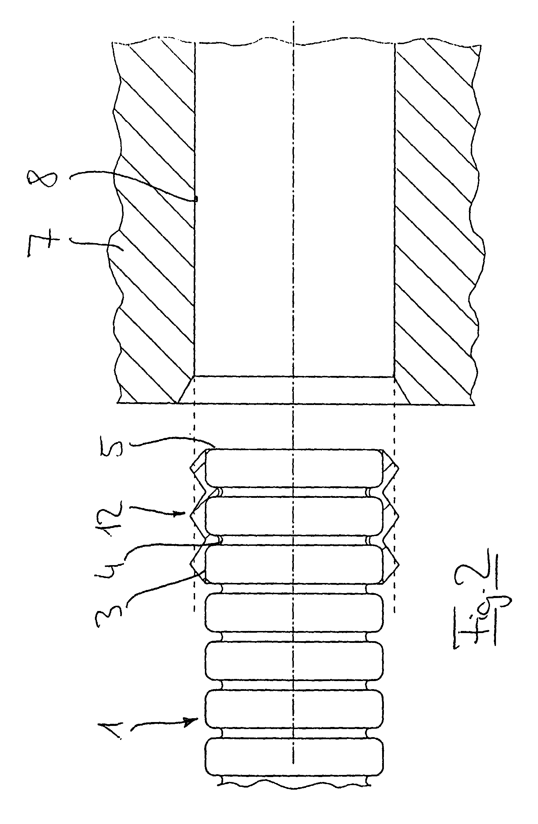

In Figur 2 ist der gleiche Metallschlauch 1 mit einem Dichtungselement 12 versehen, das zum einen drei Wellenberge 3 überragt und in zwei Wellentäler 4 eingreift sowie den endständigen Schlauchbord 5 unbeaufschlagt läßt und das zum anderen eine Form aufweist, die etwas spitzwinkliger als beim Dichtungselement 2 aus Figur 1 ausgeführt ist. Auch in Figur 2 ist zum Größenvergleich das Bauteil 7 mit Durchgangsbohrung 8 dargestellt, wobei der Innendurchmesser der Durchgangsbohrung gestrichelt bis in den Bereich des Dichtungselementes verlängert ist.

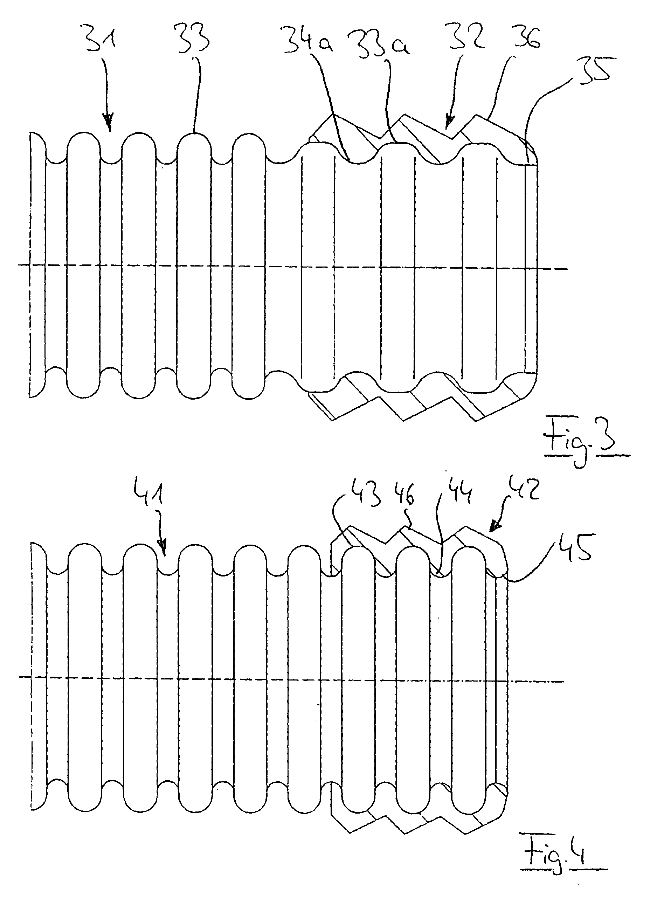

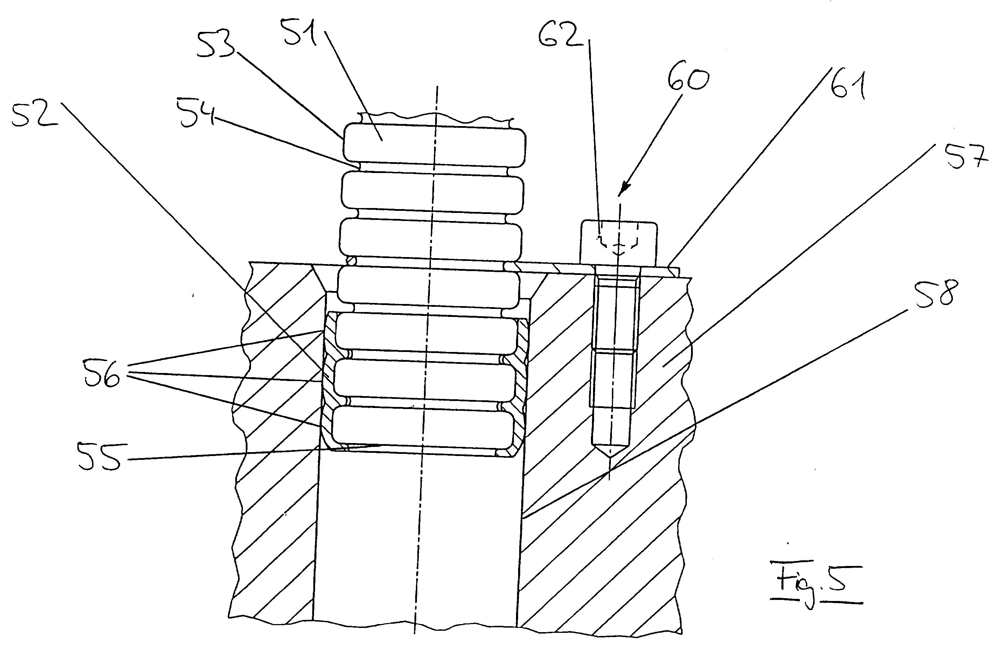

Weitere Varianten von Dichtungselementen sind in den Figuren 3 und 4 dargestellt, wobei in Figur 3 ein ringförmig gewellter Metallschlauch 31 abgebildet ist, dessen Wellenberge 33 einen halbkreisförmigen Querschnitt aufweisen und der im Bereich seines Endes Wellenberge 33a aufweist, die gereckt sind und somit in ihrem Außendurchmesser reduziert sind. Auf die letzten drei gereckten Wellen ist ein Dichtungselement 32 aufgesteckt, das von der Außenform etwas dem Dichtungselement 2 aus Figur 1 ähnelt und die drei Wellenberge 33a übergreift sowie in 2 Wellentäler 34 eingreift und den endständigen Bord 35 beaufschlagt.

Der in Figur 4 dargestellte Metallschlauch 4 ist endständig - im Gegensatz zum Metallschlauch 31 aus Figur 3 - nicht gestaucht. Er ist mit einem Dichtungselement 42 versehen, das in drei Wellentäler 44 eingreift, den endständigen Bord 45 beaufschlagt sowie drei Wellenberge 43 übergreift.

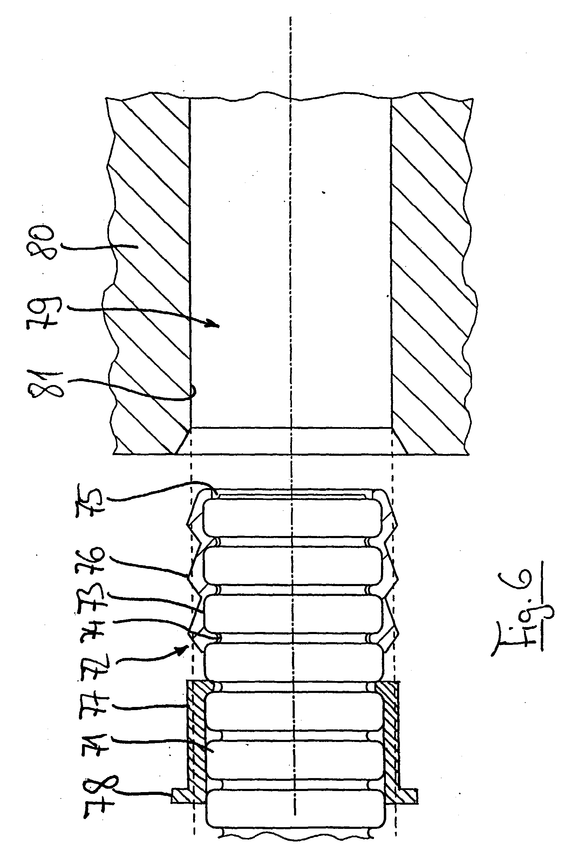

In Figur 5 ist schließlich eine erfindungsgemäße dichte Verbindung in zusammengebautem Zustand dargestellt, die aus einem Metallschlauch 51, einem auf den Metallschlauch aufgesteckten Dichtungselement 52 sowie einem Bauteil 57 mit Durchgangsbohrung 58 besteht, in die der Metallschlauch mit dem Dichtungselement eingesteckt ist. Auch das Dichtungselement 52 beaufschlagt den endständigen Bord 55 des Metallschlauches und sorgt hiermit für einen Axialanschlag beim Aufstecken des Dichtungselementes auf den Metallschlauch.

Der Metallschlauch 51 ist in der Durchgangsbohrung 58 des Bauteils 57 zum einen durch die reibende Anlage dreier Dichtlippen 56 des Dichtungselementes 52 festgelegt; zum anderen ist er auch noch über ein Halteelement 60 in Axialrichtung fixiert, welches aus einer in ein Wellentat 54 des Metallschlauches eingreifenden Metallgabel 61 besteht, die über eine Schraubverbindung 62 am Bauteil 57 festgelegt ist. Die Metallgabel 61 erstreckt sich auf der Oberseite des Bauteils 57 und greift somit in das erste Wellental des Metallschlauches ein, das aus der Durchgangsbohrung 58 hervorragt. Durch die Schraubverbindung 62 wird die Metallgabel 61 gegenüber dem Bauteil 57 unverschiebbar festgelegt und gewährleistet somit die gewünschte axiale Fixierung des Metallschlauches durch das formschlüssige Eingreifen in das Wellental 54.

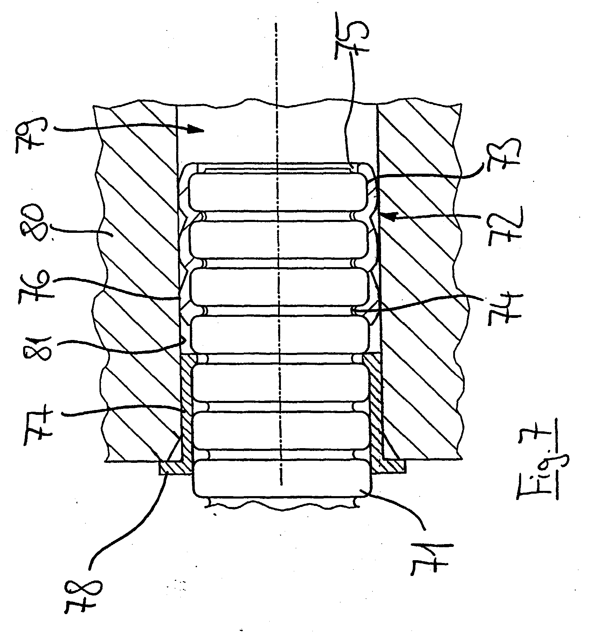

In Figur 6 ist ein Metallschlauch 71 dargestellt mit einem endständig aufgesteckten Dichtungselement 72, welches die drei letzten Wellenberge 73 übergreift, gleichzeitig in die drei dazwischen liegenden Wellentäler 74 eingreift und auch den endständigen Bord 75 beaufschlagt. Das Dichtungselement ist auf seiner Außenseite mit drei Dichtlippen 76 versehen entsprechend dem Dichtungselement 2 aus Figur 1.

Auf die - vom Schlauchende her gezählt - fünft-, sechst- und siebtletzte Welle ist ein Halteelement 77 aufgesteckt, welches zur formschlüssigen Verbindung in das Wellental zwischen dem viertletzten und dem fünftletzten Wellenberg eingreift. Das Halteelement 77 besteht aus einem Tiefziehteil und weist einen Umschlagrand 78 auf, der die Einstecktiefe des Metallschlauches 71 in eine Durchgangsbohrung begrenzen soll. Das Haltelemenent 77 kann zwar einen glattzylindrischen Umfang aufweisen, jedoch empfiehlt es sich, den Umfang mit - axialen oder umlaufenden oder auch punktuellen - Vorsprüngen zu versehen, um das Verformungsverhalten des Haltelements beim Einstecken in eine Durchgangsbohrung zu begünstigen und hierdurch den Preßsitz in der Durchgangsbohrung zu verbessern.

In Figur 6 ist eine solche Durchgangsbohrung 79 eines Bauteils 80 dargestellt mit einer glattzylindrischen Innenwandung 81. Die Durchgangsbohrung weist - wie durch die gestrichelten Linien in Figur 6 angedeutet ist - einen Durchmesser auf, der geringfügig kleiner als derjenige der Dichtlippen 76 sowie des Halteelements 77 ist. Hierdurch ergibt sich der Effekt, daß die Dichtlippen 76 und das Haltelement 77 verformt werden müssen, um in die Durchgangsbohrung 79 eingesteckt werden zu können. Die Verformung bewirkt bei den Dichtlippen eine Anlage an der Innenwandung unter Vorspannung, wodurch die Dichtwirkung verbessert wird, und bei dem Halteelement eine Erhöhung der Haftreibung des Halteelements gegenüber der Innenwandung, die die Festlegung des Metallschlauchs in der Durchgangsbohrung auch dann noch gewährleistet, wenn höhere Drücke auftreten, die allein durch die Haftreibung der Dichtlippen nicht abgefangen werden können.

In Figur 7 ist die dichte Verbindung gemäß der vorliegenden Erfindung - bestehend aus Metallschlauch, aufgestecktem Dichtelement, aufgestecktem Halteelement und Durchgangsbohrung eines Bauteils - dargestellt; hierbei sind die elastisch deformierten Dichtlippen 76 und der durch das Einstecken ebenfalls reduzierte und den Preßsitz gewährleistende Außendurchmesser des Haltelements 77 erkennbar.

Zusammenfassend bietet die vorliegende Erfindung den Vorteil, daß mit einem einfachen, aus einer Formdichtung bestehenden Bauteil eine feste und dauerhafte Anbindung eines Metallschlauches an eine Durchgangsbohrung eines Bauteils ermöglicht wird, wobei die Montage bei Anwendungsfällen mit bis zu 2 bar durch einfaches Ineinanderstecken der drei an der Verbindung beteiligten Komponenten erfolgt; lediglich bei höheren Drücken ist eine zusätzliche axiale Fixierung durch das Halteelement vorzusehen, was jedoch ebenfalls ohne größere Schweiß- oder Umformarbeiten und ohne aufwendige Veränderungen an die Durchgangsbohrung tragenden Bauteil möglich ist.

## Patentansprüche

1. Dichte Verbindung des Endes eines gewellten Metallschlauches mit einer Durchgangsbohrung eines Bauteils,
dadurch gekennzeichnet,
daß der Metallschlauch (1, 11, 31, 41, 51) ein insbesondere endständig aufgestecktes Dichtungselement (2, 12, 32, 42, 52) aufweist, daß das Dichtungselement den Umfang des Metallschlauchs auf einer axialen Länge zwischen zumindest zwei Wellentälern (4, 34, 44, 54) überlappt,
daß das Dichtungselement formschlüssig in diese zumindest zwei Wellentäler eingreift, und daß das Dichtungselement auf seiner Außenseite mit zumindest einer umlaufenden Dichtlippe (6, 36, 46, 56) versehen ist, die an der Innenseite der Durchgangsbohrung (8, 58) anliegt.

2. Dichte Verbindung nach Anspruch 1,
dadurch gekennzeichnet,
daß das Dichtungselement (2, 12, 32, 42, 52) aus elastisch nachgiebigem Material besteht.

3. Dichte Verbindung nach zumindest einem der vorstehenden Ansprüche,
dadurch gekennzeichnet,
daß die Dichtlippe (6, 36, 46, 56) elastisch nachgiebig an der Innenwandung der Durchgangsbohrung (8, 58) anliegt.

4. Dichte Verbindung nach zumindest einem der vorstehenden Ansprüche,
dadurch gekennzeichnet,
daß eines der zumindest zwei vom Dichtungselement (2, 12, 32, 42, 52) beaufschlagten Wellentäler (4, 34, 34a, 44, 54) aus dem endständigen Bord (5, 35, 45, 55) des Metallschlauchs (1, 11, 31, 41, 51) besteht.

5. Dichte Verbindung nach zumindest Anspruch 4,
dadurch gekennzeichnet,
daß das Dichtungselement (2) den endständigen Bord (5) des Metallschlauches (1) überdeckt.

6. Dichte Verbindung nach zumindest einem der vorstehenden Ansprüche,
dadurch gekennzeichnet,
daß die Durchgangsbohrung (8, 58) eine von der Dichtlippe (6, 36, 46, 56) beaufschlagte Innenwandung aufweist, deren Axialerstreckung zumindest in etwa der Länge des eingesteckten Dichtungselementes (2, 12, 32, 42, 52) entspricht.

7. Dichte Verbindung nach zumindest einem der vorstehenden Ansprüche,
dadurch gekennzeichnet,
daß der Innendurchmesser der Durchgangsbohrung (8, 58) gegenüber dem Außendurchmesser des Metallschlauchs (1, 31, 41, 51) eng toleriert ist, und daß das Dichtungselement (2, 12, 32, 42, 52) den dazwischen belassenen Zwischenraum abdichtet und überbrückt.

8. Dichte Verbindung nach zumindest einem der vorstehenden Ansprüche,
dadurch gekennzeichnet,
daß der Metallschlauch (1, 31, 41, 51) ringförmig gewellt ist.

9. Dichte Verbindung nach zumindest einem der vorstehenden Ansprüche,
dadurch gekennzeichnet,
daß das mit der Durchgangsbohrung (8, 58) versehene Bauteil (7, 57) ein Motorgehäuse ist, und daß der Metallschlauch (1, 31, 41, 51) eine Ölleitung ist.

10. Dichte Verbindung nach zumindest einem der vorstehenden Ansprüche,
dadurch gekennzeichnet,
daß zur Erhöhung der axialen Fixierung des Metallschlauches (51) in der Durchgangsbohrung (58) am Bauteil (57) ein Halteelement festgelegt ist, das den Metallschlauch formschlüssig umgreift und ihn insbesondere im Bereich eines Wellentales (54) beaufschlagt, welches in einem Schlauchabschnitt angeordnet ist. der aus der Durchgangsbohrung vorsteht.

11. Dichte Verbindung nach Anspruch 10,
dadurch gekennzeichnet,
daß das Halteelement (60) ein U-förmiger, den Metallschlauch (51) im Bereich des Wellentals (54) umgreifender Federbügel, eine Schnappfeder, eine Metallgabel, ein Blechformteil ohne federnde Eigenschaften oder dergleichen ist.

12. Dichte Verbindung nach zumindest einem der vorstehenden Ansprüche,
dadurch gekennzeichnet,
daß der Metallschlauch (71) zur Verbesserung der axialen Fixierung in der Durchgangsbohrung (79) ein Halteelement (77) trägt, daß das Haltelelement zusätzlich zum Dichtungselement (72) auf den Metallschlauch aufgesteckt und zusammen mit diesem in die Durchgangsbohrung eingesteckt ist, und daß das Haltelement in seinem Durchmesser gegenüber dem Durchmesser der Durchgangsbohrung so dimensionert ist, daß es unter Vorspannung an der Innenseite der Durchgangabohrung anliegt.

13. Dichte Verbindung nach zumindest Anspruch 12,
dadurch gekennzeichnet,
daß das Halteelement (77) auf dem Metallschlauch (71) in dessen Einsteckrichtung hinter dem Dichtungselement (72) angeordnet ist.

14. Dichte Verbindung nach zumindest einem der vorstehenden Ansprüche 12 und 13,
dadurch gekennzeichnet,
daß das Halteelement (77) in zumindest ein Wellental (74) des Metallschlauches (71) formschlüssig eingreift.

15. Dichte Verbindung nach zumindest einem der vorstehenden Ansprüche 12 bis 14,
dadurch gekennzeichnet,
daß das Halteelement (77) unter Vorspannung an der Außenwand (81) des Metallschlauches (71) anliegt.

16. Dichte Verbindung nach zumindest einem der vorstehenden Ansprüche 12 bis 15,
dadurch gekennzeichnet,
daß das Haltelement (77) aus einem Tiefziehteil besteht, das zusammen mit dem Metallschlauch (71) in die Durchgangsbohrung (79) eingepreßt ist.

17. Dichte Verbindung nach zumindest einem der vorstehenden Ansprüche 12 und 16,
dadurch gekennzeichnet,
daß das Halteelement (77) im nicht in die Durchgangsbohrung (79) eingesteckten Zustand einen größeren Außendurchmesser aufweist als die Durchgangsbohrung.

18. Dichte Verbindung nach zumindest einem der vorstehenden Ansprüche 12 bis 17,
dadurch gekennzeichnet,
daß das Halteelement (77) mit in Axialrichtung und/oder Radialrichtung verlaufenden und/oder punktuellen, sich radial erstreckenden Vorsprüngen versehen.
